Europäisches Patentamt

European Patent Office

Office européen des brevets

(11) Publication number: **0 388 010**
**A1**

# EUROPEAN PATENT APPLICATION

(21) Application number: 90301532.9

(51) Int. Cl.⁵: **C22B 9/02, C22B 21/06**

(22) Date of filing: **14.02.90**

(30) Priority: **23.02.89 GB 8904152**

(43) Date of publication of application:
**19.09.90 Bulletin 90/38**

(84) Designated Contracting States:
**AT BE CH DE DK ES FR GB GR IT LI NL SE**

(71) Applicant: FOSECO INTERNATIONAL LIMITED
285 Long Acre
Nechells Birmingham B7 5JR(GB)

(72) Inventor: **Kaettlitz, Wolfgang Paul**
**Martin-Luther-Strasse 26**
**D-4280 Borken(DE)**
Inventor: **Stoetzel, Reinhard**
**Nonnenfettweide 20**
**D-4280 Borken(DE)**

(74) Representative: **Moore, John Hamilton**
**Foseco Holding International Limited Group**
**Patents Department 285 Long Acre Nechells**
**Birmingham B7 5JR(GB)**

(54) **Filters for light metals.**

(57) A filter for light metals comprises a cellular body formed of a composition comprising at least one fluxing agent for the light metal. Suitable fluxing agents include alkali metal fluorides, alkaline earth metal fluorides, aluminium fluoride, complex alkali metal fluorides, calcium metaphosphate, borates, boron phosphates and low melting point glasses. The filters preferably have a melting point of 800 - 1000°C, more preferably 850 - 900°C. When used filters are added to a furnace with light metal which is to be remelted and the metal is melted in the presence of an exothermic flux the filters disintegrate allowing metal contained in them to be recovered.

EP 0 388 010 A1

## FILTERS FOR LIGHT METALS

This invention relates to filters for filtering light metals, by which term is to be understood aluminium, magnesium, alloys of these two metals, and alloys of either or both of these metals with other metals in which alloys, aluminium and/or magnesium predominate.

It is well known to use porous ceramic bodies to filter molten light metals. Such bodies can have a honeycomb type of structure having cells extending between opposite faces of the body but they are more usually open-cell foams.

When porous ceramic filters have been used to produce light metal castings they are often added, along with light metal which is to be remelted for further use, to a furnace, and as a result problems arise. The filters tend to stick to the walls of the furnace and can cause blockages, and particles of ceramic material from the filters become dispersed in the molten light metal thus producing additional inclusions which must be removed when the remelted metal is cast. Furthermore, it is difficult to remove metal contained in the filters during remelting and when the filters are removed with the dross formed on the surface of the remelted metal they still contain much metal which is wasted.

It has now been found that these problems can be overcome by using a filter which is made from one or more fluxing agents for light metal and which will disintegrate during the remelting operation.

According to the invention there is provided a filter for the filtration of molten metal light metal comprising a cellular body formed of a composition comprising as least one fluxing agent for the light metal.

The fluxing agents used to form the filter must have a sufficiently high melting point so that the filter does not melt or disintegrate when the filter is used to filter molten light metals. The filter preferably has a melting point in the range of 800 -1000°C, more preferably 850 - 900°C.

Suitable fluxing agents are alkali metal fluorides such as sodium fluoride or potassium fluoride, alkaline earth metal fluorides, such as calcium fluoride or strontium fluoride, aluminum fluoride, complex alkali metal fluorides such as sodium aluminium fluoride, potassium aluminium fluoride, potassium borofluoride or potassium titanofluoride, calcium metaphosphate, a borate such as borax, boron phosphates and a low melting point glass such as an alkali borate phosphate glass.

The cellular body may be a honeycomb type of structure having cells which extend between two opposite faces or a structure having interconnecting cells such as an open-cell foam.

Open-cell foam structures are preferred and such structures may be made using a known method of making a ceramic foam in which an organic foam, usually polyurethane foam, is impregnated with an aqueous slurry of the material which is to form the finished foam containing a binder, the impregnated foam is dried to remove water and the dried impregnated foam is fired to burn off the organic foam to produce a ceramic foam.

The slurry used to produce the filters may also contain additives to improve the applicational properties of the slurry during impregnation of the organic foam. Examples of such additives are rheological agents, for example organic thickening agents, clay or a fine particle silica such as fumed silica, wetting agents, antifoaming agents, and coating aids such as polyvinyl alcohol to aid coating of the foam.

When the filters of the invention are made by this method the fluxing agents used must be insoluble in water and the temperature to which the impregnated foam is heated to burn off the organic foam must be such that the fluxing agents do not melt.

Suitable binders for producing the filter of the invention include monoaluminium phosphates, sodium silicate, silica sol, silicophosphate and a cement such as high alumina cement.

In addition to one or more fluxing agents for light metals the filters will also usually contain refractory materials such as alumina, silica, titanium dioxide, aluminosilicates, zirconium silicate, a crushed glass such as an alkali silicate glass or graphite or other carbon containing materials such as soot.

The filters of the invention will usually contain 10-60%, preferably 20-40%, by weight of fluxing agent, 5-50%, preferably 20-40%, by weight refractory material and 5-40%, preferably 20-40%, by weight binder.

Although the filters of the invention will withstand the normal casting temperatures to which they are subjected when they are used to filter light metals, usually 700 - 750°C in the case of aluminium alloys and 700 - 780°C in the case of magnesium alloys they will disintegrate when subjected to more elevated temperatures.

If the used filters are added to a furnace, together with light metal which is to be remelted, and the remelting is done in the presence of a drossing flux which reacts exothermically and raises the dross temperature to 800°C - 1000°C, the used filters will float to the surface of the remelted metal, where they disintegrate in contact with the drossing flux and the dross. Metal contained in the used filters is remelted and passes to the bath of molten metal below and the fluxing agents from the filters augment the action of the drossing flux in removing oxides from the metal bath and producing a dry dross.

Suitable exothermic drossing fluxes contain for example, alkali metal chlorides, alkali metal fluorides, alkaline earth metal chlorides, alkaline earth metal fluorides and/or magnesium chloride together with an oxidising agent such as a sulphate, a nitrate, a chlorate or a perchlorate or an alkali metal silicofluoride. Sulphates, nitrates, chlorates, perchlorates and alkali metal silicofluorides react exothermically with metal present in the dross thus raising the temperature of the dross.

The following examples will serve to illustrate the invention:-

EXAMPLE 1

Open-cell foam filters were made by impregnating reticulated polyurethane foam with an aqueous slurry containing by weight:-

| | |
|---|---|
| calcium fluoride | 30.0% |
| sodium aluminium fluoride | 30.0% |
| high alumina cement | 3.0% |
| fine silica powder | 5.0% |
| ball clay | 2.0% |
| colloidal silica | 0.8% |
| wetting agent | 0.7% |
| sodium silicate solution (CARSIL 900) | 20.0% |
| polyvinyl alcohol | 1.5% |
| aqueous dispersion of acrylic acid-ester copolymer (ACRONAL) | 1.0 |
| water | 6.0% |

The impregnated foam was dried and then fired at a temperature of 600°C for 2 hours. The filters measured 50 x 50 x 22 mm and had a porosity of 4 pores per cm.

30 of the filters were used in the production of 30 LM25 aluminium alloy castings in a diecasting foundry. Each casting weighed 5 kg and the filters were inserted in the running system of the die. The running systems were removed from the castings and on machining of the castings no inclusions were detected in the cast metal.

The aluminium alloy running systems (total weight 30 kg) were loaded into the empty crucible of an electrically heated crucible furnace and 1.5% by weight based on the weight of aluminium alloy of an exothermic flux was added.

The flux had the following composition by weight:-

| | |
|---|---|
| sodium chloride | 28% |
| potassium chloride | 24% |
| sodium aluminium fluoride | 7% |
| sodium silicofluoride | 16% |
| sodium sulphate | 15% |
| sodium nitrate | 5% |
| calcium fluoride | 5% |

The aluminium alloy was melted and heated to a temperature of 750°C and a further 1.5% by weight of the flux based on the weight of the aluminium alloy was added to the dross formed on the surface of the molten aluminium alloy. The dross was stirred slightly and a mild exothermic reaction was observed. The filters floated to the surface of the molten aluminium alloy and during the drossing action they disintegrated completely. The residual material from the filters was taken up in the dry, powdery dross which was formed. The dross was easily removed from the molten aluminium alloy bath and the aluminium alloy content of the dross was found to be only about 35% by weight based on the weight of the dross.

EXAMPLE 2

Open-cell foam filters were made by impregnating reticulated polyurethane foam with an aqueous slurry containing by weight:-

| | |
|---|---|
| graphite powder | 21.0% |
| amorphous silica powder | 10.0% |
| crushed glass | 9.0% |
| fine silica powder | 2.5% |
| titanium dioxide | 0.3% |
| wetting agent | 0.3% |
| antifoam agent | 0.5% |
| alkaliborate-phosphate glass | 11.5% |
| phosphoric acid | 4.0% |
| water | 5.0% |
| aqueous monoaluminiumphosphate solution | 35.9% |

The impregnated foam was dried and then fired at a temperature of 600°C for 2 hours. The filters had the same dimensions and porosity as the filters in Example 1.

50 of the filters were used in the production of 50 LM25 aluminium alloy castings in a diecasting foundry. Each casting weighed 3 kg and the filters were placed in the ingate of the die. The ingates were removed from the castings and on machining of the castings no inclusions were detected in the cast metal. A pressure test at 6 bar showed that all the castings were pressure tight.

The aluminium alloy ingates (total weight 50 kg) were loaded into the empty crucible of an electrically heated crucible furnace. The aluminium alloy was melted and all the filters rose to the surface of the melt. 1.5% by weight based on the weight of aluminium alloy of an exothermic flux was added and the melt was heated to a temperature of 750°C.

The flux had the following composition by weight:-

| | |
|---|---|
| sodium chloride | 35% |
| potassium chloride | 30% |
| sodium aluminium fluoride | 10% |
| sodium carbonate | 10% |
| calcium fluoride | 5% |
| sodium nitrate | 5% |
| graphite | 5% |

The dross formed on the surface of the molten aluminium alloy was stirred slightly and a mild exothermic reaction was observed. The filters disintegrated completely during the drossing action and the residual material of the filters was taken up in the dry, powdery dross which was formed.

The dross was easily removed from the molten aluminium alloy bath and the aluminium alloy content of the dross was found to be only about 30% by weight based on the weight of the dross.

## Claims

1. A filter for the filtration of molten light metals comprising a cellular body and characterised in that the cellular body is formed of a composition comprising at least one fluxing agent for the light metal.

2. A filter according to Claim 1 characterised in that the filter has a melting point of 800 - 1000°C

3. A filter according to Claim 2 characterised in that the filter has a melting point of 850 - 900°C.

4. A filter according to any one of Claims 1 to 3 characterised in that the fluxing agent is an alkali metal fluoride, an alkaline earth metal fluoride, aluminium fluoride, a complex alkali metal fluoride, calcium metaphosphate, a borate, a boron phosphate or a low melting point glass.

5. A filter according to any one of Claims 1 to 4 characterised in that the cellular body also contains a refractory material.

6. A filter according to any one of Claims 1 to 5 characterised in that the cellular body also contains a binder.

7. A filter according to Claim 6 characterised in that the cellular body contains 10-60% by weight fluxing agent, 5-50% by weight refractory material and 5-40% by weight binder.

8. A filter according to Claim 7 characterised in that the cellular body contains 20-40% by weight fluxing agent, 20-40% by weight refractory material and 20-40% by weight binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 014 165  (SERVIMETAL)<br>* Claims; pages 4-5 *<br>--- | 1-8 | C 22 B   9/02<br>C 22 B  21/06 |
| X | JAPANESE PATENT REPORTS, vol. 74, no. 30, August 1974, Derwent Publications Ltd, London, GB; & JP-A-74 027 921 (K. KOKISO) 22-07-1974<br>* Whole abstract *<br>--- | 1-8 | |
| X | GB-A-2 062 609  (BRIDGESTONE TIRE K.K.)<br>* Claims; page 2, lines 28-36 *<br>--- | 1-8 | |
| A | EP-A-0 025 001  (SERVIMETAL)<br>--- | | |
| A | FR-A-2 375 329  (ALUMINIUM SUISSE S.A.)<br>--- | | |
| A | FR-A-2 375 328  (ALUMINIUM SUISSE S.A.)<br>--- | | |
| A | GB-A-1 148 344  (FOSECO)<br>----- | | |

**TECHNICAL FIELDS SEARCHED (Int. Cl.5)**

C 22 B

The present search report has been drawn up for all claims

| Place of search | Date of completion of the search | Examiner |
|---|---|---|
| THE HAGUE | 04-07-1990 | JACOBS J.J.E.G. |